# EUROPEAN PATENT SPECIFICATION

(11) **EP 2 512 790 B1**
(45) Date of publication and mention of the grant of the patent: **04.06.2014**
(21) Application number: 10805833.0
(22) Date of filing: 29.11.2010
(51) Int. Cl.: B29D 30/30, B29D 30/46, B60C 15/00

(54) **PROCESS FOR BUILDING TYRES FOR VEHICLE WHEELS**
VERFAHREN FÜR DIE HERSTELLUNG VON REIFEN FÜR FAHRZEUGRÄDER
PROCÉDÉ DE FABRICATION DE PNEUS POUR ROUES DE VÉHICULE

(30) Priority: 14.12.2009 IT MI20092178; 23.12.2009 US 282166 P
(43) Date of publication of application: 24.10.2012
(73) Proprietor: Pirelli Tyre S.p.A., 20126 Milano (IT)
(72) Inventor: MANCINI, Gianni, I-20126 Milan (IT); LO PRESTI, Gaetano, I-20126 Milan (IT)
(74) Representative: Tansini, Elio Fabrizio
(86) International application number: PCT/IB2010/055466
(87) International publication number: WO 2011/073834

(56) References cited:
- EP-A1- 0 928 680
- EP-A1- 0 956 940
- EP-A1- 1 985 468
- EP-A1- 2 127 857
- WO-A1-01/38077
- WO-A1-03/045714
- WO-A1-2009/068939
- DE-A1- 3 515 944
- US-A1- 2008 023 119

## Description

The present invention relates to a process for building tyres for vehicle wheels.

A tyre for vehicle wheels generally comprises a carcass structure including at least one carcass ply having respectively opposite end flaps in engagement with respective annular anchoring structures integrated into the regions usually identified as "beads".

Associated with the carcass structure is a belt structure comprising one or more belt layers, located in radially superposed relationship with each other and with the carcass ply, having textile or metallic reinforcing cords with a crossed orientation and/or substantially parallel to the circumferential extension direction of the tyre.

Applied at a radially external position to the belt structure is a tread band of elastomeric material, like other semifinished products constituting the tyre.

Respective sidewalls of elastomeric material are in addition applied at an axially external position onto the side surfaces of the carcass structure, each extending from one of the side edges of the tread band until close to the respective annular anchoring structure to the beads.

After building of the green tyre carried out through assembly of respective semifinished products, a curing and moulding treatment is generally carried out which aims at determining the structural stabilisation of the tyre through cross-linking of the elastomeric material, as well as at impressing the tread band with a desired tread pattern and stamping possible distinctive graphic marks at the sidewalls.

Within the scope of the present specification and the following claims, by the term "elastomeric material" it is intended a compound comprising at least one elastomeric polymer and at least one reinforcing filler. Preferably, this composition further comprises additives such as cross-linking agents and/or plasticizers. Due to the presence of the cross-linking agents, this material can be cross-linked by heating, so as to form the final article of manufacture.

To the aims of the present specification and the subsequent claims, by "strip-like element" it is intended an elongated article of manufacture cut to size which has a cross-section outline of flattened conformation and comprising one or more cords of textile and/or metallic material, extending parallel to the longitudinal extension of the strip-like element itself and embedded in, or at least partly coated with at least one layer of elastomeric material.

Document WO 2009/068939 in the name of the same Applicant, discloses a process in which the carcass structure is made through laying of strip-like elements in circumferentially mutually approached relationship on a building drum. The strip-like elements are laid by means of a laying unit adapted to sequentially engage each of the strip-like elements and determine application thereof onto the laying surface radially external to the building drum. A feeding unit comprises a cutting member designed to cut the continuous ribbon-like element for obtaining the individual strip-like elements.

The apparatus described in WO 2009/068939 further comprises an auxiliary adjustment device capable of moving the laying unit around a respective correction axis that is substantially radial to the geometric rotation axis of the building drum. The function of the auxiliary adjustment device is to lay the strip-like elements on the building drum at any angle relative to the circumferential extension of same, so as to manufacture carcass plies in which the cords forming part thereof have a "ply angle" different from 90° relative to a longitudinal extension direction of the ply itself, i.e. relative to a circumferential direction of the tyre to be obtained.

Document US 7,314,073 discloses a device for manufacturing a reinforcing structure for a tyre. This device includes a laying head for applying strip-like elements onto a forming support. The laying head comprises a cradle, mounted on a carriage and rotating relative to the carriage around a first axis. The carriage carries a laying device comprising a laying roller and is installed on a guide that is substantially parallel to the rotation axis of the forming support. Mounted on bearings in the cradle is a frame that can rotate relative to the cradle around a second axis. Integrated into the frame is a cutting element of the guillotine type. The frame can rotate through 180° relative to the cradle. The carriage is moved from the right to the left on the guide while the forming support is being rotated through a predetermined arc. During these movements, a ribbon is applied onto the forming support by the laying roller. Towards the end of these movements, the guillotine element cuts the ribbon according to a predetermined angle so as to define a strip-like element. The strip-like elements are laid down adjacent to each other for progressively covering the whole peripheral surface of the support. For laying a subsequent layer of strip-like elements, the frame and the guillotine element rigidly secured thereto are required to be rotated through 180°. This rotation involves overturning of the ribbon around its longitudinal axis and arrangement of the opposite face of said ribbon towards the forming support. The above described movements are repeated but laying of the ribbon is carried out from the left to the right.

According to WO-2003/045714 a belt structure is formed by means of band-like portions each comprising parallel cords incorporated in an elastomer layer and sequentially laid in a mutually circumferentially adjacent arrangement on a toroidal support. The band-like portions are applied with at least one of the smaller sides circumferentially non-aligned with the corresponding smaller side of at least one of the circumferentially adjacent band-like portions, so that said cords in the side zones of the belt structure of the radial tyre thus obtained have a non-uniform density.

DE 3515944 relates to a pneumatic vehicle tyre with a radial carcass which is anchored in the bead parts by wrapping around the bead cores. In order achieve a junction which is favourable in terms of rigidity between the edges of the carcass layer and the rubber enclosing these edges, the borders of the edges are provided with indents arranged at a distance from one another.

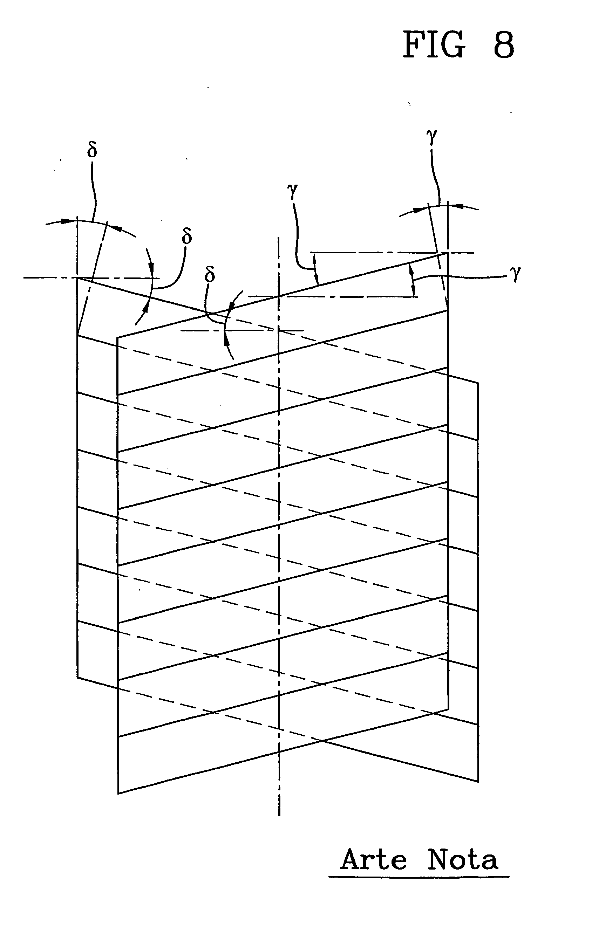

The Applicant has noticed that, using a laying unit as the one described in document WO 2009/068939 for making a reinforcing structure including at least two layers of mutually crossed strip-like elements, such as a carcass structure provided with two plies, it is necessary, at the end of laying of a first layer, to rotate the laying unit around the respective correction axis before laying down the second layer. In fact (Fig. 8 appended thereto), being denoted as "δ" the angle delimited between a direction parallel to an axial direction of the forming drum and a direction corresponding to the longitudinal extension of a strip-like element of a first layer of strip-like elements, and being denoted as "γ" the angle delimited between the aforesaid direction parallel to the axial direction of the building drum and a direction corresponding to the longitudinal extension of a strip-like element of a second layer of strip-like elements crossing those of the first layer, for passing from laying of the strip-like elements of the first layer to laying of the strip-like elements of the second layer the laying unit must be rotated relative to the building drum and around the respective correction axis through an angle "α" equal to "δ + γ".

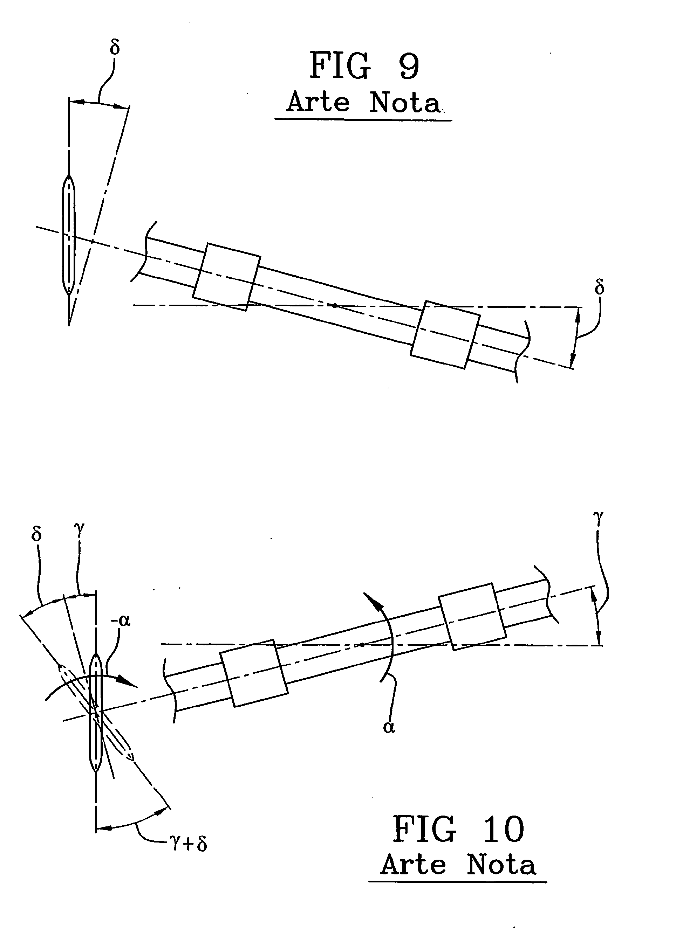

The Applicant has further noticed that, in order to obtain ends of the strip-like elements of the first and second layers with an edge parallel to the circumferential extension of the building drum, the blade of the cutting member described in document WO 2009/068939 and mounted on board the laying unit must form with a direction perpendicular to the direction corresponding to the longitudinal extension of a strip-like element of the first strip-like element layer, the aforesaid angle "δ" (Fig. 9), and the same blade must form with the direction perpendicular to the direction corresponding to the longitudinal extension of a strip-like element of the second strip-like element layer, the aforesaid angle "γ" (Fig. 10). The Applicant has therefore verified that, before passing from laying of the first layer to laying of the second layer, the cutting member must be rotated on the laying unit and around a correction axis thereof through an angle "-α" equal to "- (δ + γ).

The Applicant has seen that the strip-like element cut first after rotation of the laying unit and rotation of the cutting member, i.e. before starting laying of the second layer of strip-like elements, must be rejected because it has opposite ends with different and opposite cutting angles. The Applicant has verified that this rejection multiplied by the number of the produced tyres, involves a great material waste that adversely affects the production cost of said tyres. The Applicant has also verified that the operation that is carried out on board the laying unit for rotating the cutting member increases the cycle time necessary for forming the carcass ply.

The Applicant has observed that also in the device described in document US 7,314,073 the cutting element of the guillotine type integrated into the frame must be rotated together with the frame before passing to laying of the second strip-like element layer.

In addition, the Applicant has ascertained that the device structure in US 7,314,073 does not allow a quick laying of the strip-like elements because for applying each individual strip-like element it is necessary to simultaneously combine the movement of the forming support with that of the carriage. In particular, it is necessary to rotate the forming support through a predetermined angle about its axis and simultaneously move the carriage carrying the guillotine element and the laying roller along an axial direction.

The Applicant has also noticed that the structure of the device described in US 7,314,073 is complicated and consequently not very reliable.

The above findings have brought the Applicant to think that the drawbacks highlighted above can be overcome by adopting a laying unit of the type described in document WO 2009/068939 and laying the strip-like elements of the two layers with the same angular position of the cutting member relative to said laying unit.

More specifically, the Applicant has found that, by cutting the last strip-like element of the first layer with the same cutting angle as adopted for the strip-like elements of the second layer or cutting the first strip-like element of the second layer with the same cutting angle as adopted for the strip-like elements of the first layer, or laying the strip-like elements of the second layer with the same cutting angle as adopted for the first layer, thus forming at least one circumferential edge of the first and/or the second layer of an at least partly zigzag indented type, it is possible to avoid rejection of the strip-like element cut first after rotation of the laying unit without producing great amounts of scrap material, and also to reduce the cycle time for building the carcass structure.

More specifically, in one aspect, the present invention relates to a process for building tyres for vehicle wheels according to claim 1, comprising:
- forming a plurality of strip-like elements in such a manner that the opposite end edges of each strip-like element are cut according to at least one cutting angle;
- forming at least one first reinforcing layer, that is a first carcass ply and one second reinforcing layer, that is a second carcass ply which radially overlap each other on a laying surface radially external to a forming drum and belonging to a carcass structure of a tyre being processed, each reinforcing layer comprising a succession of strip-like elements disposed circumferentially in a mutually approached relationship, said opposite end edges of each strip-like element forming, in succession with each other, axially opposite respective edges of said first reinforcing layer and second reinforcing layer;
- wherein at least one of the axially opposite edges of at least one of said first reinforcing layer and second reinforcing layer is at least partly indented.

The Applicant thinks that using this process it is no longer necessary to produce scrap material on passing, during building, from the end of the first reinforcing layer to the beginning of the second reinforcing layer, and preferably between the end of building of the first carcass ply and the beginning of building of the second carcass ply. The Applicant in addition believes that, as a result, also reduced is the cycle time for building the two reinforcing layers and preferably the two carcass plies, in the preferred case being also reduced the overall time for building of the carcass structure.

The present invention, in said aspect, can have one or more of the preferred features hereinafter described.

Preferably, said strip-like elements of said first reinforcing layer are laid according to a predetermined inclination angle relative to an axial symmetry plane of said forming drum.

Preferably, said strip-like elements of said second reinforcing layer are laid according to a predetermined second inclination angle different from the first one, relative to an axial symmetry plane of said forming drum.
Preferably, the formation of said plurality of strip-like elements comprises:
- setting an angular position of a cutting member, mounted on board a laying head, relative to said laying head according to said at least one cutting angle;
- feeding the laying head with a continuous elongated or ribbon-like element;
- cutting the continuous elongated element by means of the cutting member.

Preferably, forming of said first reinforcing layer comprises:
- setting a first angular position of a laying head around an axis radial to the forming drum;
- laying said strip-like elements on the laying surface so as to form said first reinforcing layer.

Preferably forming of said second reinforcing layer comprises:
- rotating the laying head around the axis radial to the forming drum for setting a second angular position different from the first one;
- laying said strip-like elements at a position radially external to the first reinforcing layer so as to form said second reinforcing layer.

In accordance with a preferred embodiment, the process comprises: maintaining the angular position of the cutting member constant with respect to the laying head and cutting all the strip-like elements of the first reinforcing layer and the second reinforcing layer according to a predetermined common cutting angle.

The cutting member mounted on board the laying head keeps its relative position with respect to the head itself during laying of the first reinforcing layer and the second reinforcing layer. This expedient enables time to be saved during the building cycle preferably of the carcass structure, because the operation of adjusting the position of the cutting member relative to the head is not carried out.

In accordance with a preferred alternative embodiment, the process comprises: rotating the cutting member relative to said laying head after bringing the laying head to the second angular position.

All the opposite edges of the strip-like elements of the first reinforcing layer are cut according to the same first cutting angle, one of the edges of the strip-like element laid first and belonging to the second reinforcing layer has the same first cutting angle, and all the remaining edges of the strip-like elements of the second reinforcing layer have the same second cutting angle. One of the opposite edges of the second reinforcing layer therefore has an indented region at the strip-like element laid first.

In accordance with a preferred alternative embodiment, the process comprises: rotating the cutting member relative to said laying head before bringing the laying head to the second angular position.

All the opposite edges of the strip-like elements of the second reinforcing layers are cut according to the same second cutting angle, one of the edges of the strip-like element laid last and belonging to the first reinforcing layer has the same second cutting angle and all the remaining edges of the strip-like elements of the first reinforcing layer have the same first cutting angle.

One of the opposite edges of the first reinforcing layer therefore has an indented region at the strip-like element laid last.

Preferably, the laying operation comprises:
supporting each strip-like element by means of two supporting elements belonging to the laying head;
moving the supporting elements and said strip-like element along a radial trajectory towards the forming drum to make said strip-like element approach the laying surface.

In addition, preferably, the laying operation comprises:
moving the two supporting elements away from each other along a substantially axial direction making them slide relative to each strip-like element, so as to progressively apply said strip-like element against the laying surface, pulling it in said opposite directions.

Laying of each strip-like element carried out according to the above steps is very quick and precise.

In accordance with a preferred embodiment, the strip-like elements of the first reinforcing layer are inclined on the opposite side relative to the strip-like elements of the second reinforcing layer with respect to an angular reference position perpendicular to an axial symmetry plane of the forming drum.

The strip-like elements of the first layer and the second layer lie inclined on opposite sides relative to an axial direction referred to the forming drum.

Preferably, the cutting angle is complementary to the first inclination angle, and the axially opposite edges of each strip-like element of the first reinforcing layer are parallel to the axial symmetry plane of the forming drum.

The second layer has indented opposite edges, whereas the first layer has opposite edges each disposed on a circumference.

Alternatively, the cutting angle is complementary to the second inclination angle, and the axially opposite edges of each strip-like element of the second reinforcing layer are parallel to the axial symmetry plane of the forming drum.

The first layer has indented opposite edges, whereas the second layer has opposite edges each disposed on a circumference.

According to an embodiment, the axial extension of the first reinforcing layer is greater than the axial extension of the second reinforcing layer.

Alternatively, the axial extension of the first reinforcing layer is smaller than the axial extension of the second reinforcing layer.

Preferably, the difference between the axial extension of the first reinforcing layer and the axial extension of the second reinforcing layer is included between about 1% and about 8% of the axial extension of the axially more extended reinforcing layer.

Preferably, the first inclination angle is included between about 70° and about 90°.

Preferably, the first inclination angle is included between about 75° and about 87°.

Preferably, the second inclination angle is included between about 90° and about 110°.

Preferably, the second inclination angle is included between about 93° and about 105°.

In accordance with a preferred embodiment, the process further comprises:
- coaxially engaging an annular anchoring structure around each of two end flaps of said first carcass ply and second carcass ply;
- turning up each of the end flaps around the respective annular anchoring structure, forming said carcass structure.

Preferably, the process comprises: positioning the at least partly indented edge at a tyre region radially external to said annular anchoring structure.

The at least partly indented edge positioned at said region at which the maximum bending of the tyre during rolling occurs, allows a less net discontinuity to be obtained in passing from the extremity of the turned end flap of the carcass structure to the tyre sidewall and therefore a less localised concentration of the inner stresses. This structure thus gives a greater resistance to fatigue to said region.

Preferably, the process comprises: axially moving the at least partly indented edge to a position in side by side relationship with said annular anchoring structure.

The at least partly indented edge positioned on the bead ring does not affect the handling and resistance-to-fatigue performance of the tyre as compared with plies having non-indented edges, because in this region important bending movements of the tyre during rolling do not occur.

In accordance with a preferred embodiment, the process comprises: cutting the opposite end edges of each strip-like element of the first layer following an arched outline.

Preferably, the process comprises: cutting the opposite end edges of each strip-like element of the second layer following an arched outline.

In accordance with a preferred embodiment, the process comprises: removing or rounding off the sharp corners present at the opposite end edges of each strip-like element of the first layer.

Preferably, the process comprises: removing or rounding off the sharp corners present at the opposite end edges of each strip-like element of the second layer.

Rounding-off of the edges avoids triggering of tyre breakings at the sharp corners of the indented edges. Further features and advantages will become more apparent from the detailed description of a preferred but not exclusive embodiment of a process for building tyres for vehicle wheels in accordance with the present invention.

This description will be set out hereinafter with reference to the accompanying drawings, given by way of non-limiting example, in which:
- Fig. 1 diagrammatically shows a front view of a laying unit and a forming drum designed to put into practice a process according to the present invention;
- Fig. 2 is a top view of the forming drum in Fig. 1 with some strip-like elements of a first layer laid down according to the process of the invention;
- Fig. 3 shows the laying unit of Fig. 1 from the top view of Fig. 2, during laying of the strip-like elements of the first layer;
- Fig. 4 is a top view of the forming drum of Fig. 1 with some strip-like elements of a second layer laid on the first layer according to the process of the invention;
- Fig. 4a is a top view of the forming drum of Fig. 1 with some strip-like elements of a second layer laid on the first layer according to a first variant of the process of the invention;
- Fig. 4b shows a top view of the forming drum of Fig. 1 with some strip-like elements of a second layer laid on the first layer according to a second variant of the process of the invention;
- Fig. 5 shows the laying unit of Fig. 1 from the top view of Fig. 4, during laying of the strip-like elements of the second layer;
- Fig. 6 is a perspective view of a fragmentary diametrical section of a tyre that can be manufactured by the process of the present invention, with the sidewall interrupted for better showing the carcass structure;
- Fig. 7 shows the tyre seen in Fig. 6 manufactured according to a variant of the process of the invention;
- Fig. 8 is a top view of a forming drum with two layers of strip-like elements laid thereon according to the known art;
- Fig. 9 shows a laying unit from the top view of Fig. 8, during laying of the strip-like elements of the first layer according to the known art;
- Fig. 10 shows a laying unit from the top view of Fig. 8, during laying of the strip-like elements of the second layer according to the known art.

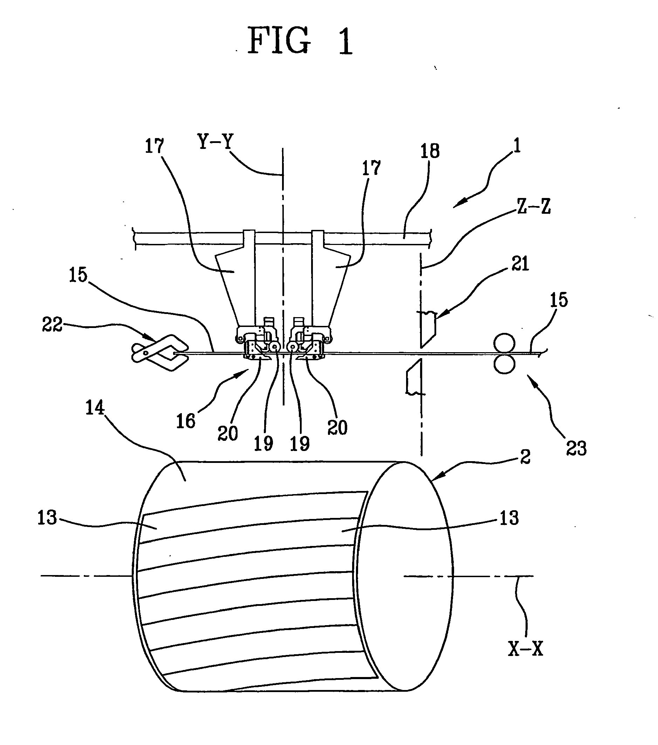

Generally identified by reference numeral 1 in figure 1 is a laying unit associated with a forming drum 2.

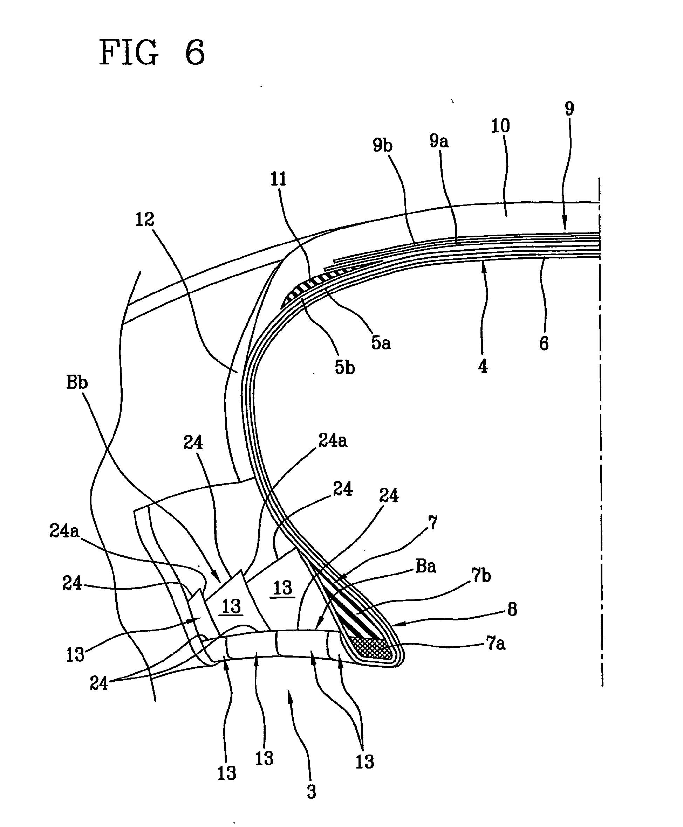

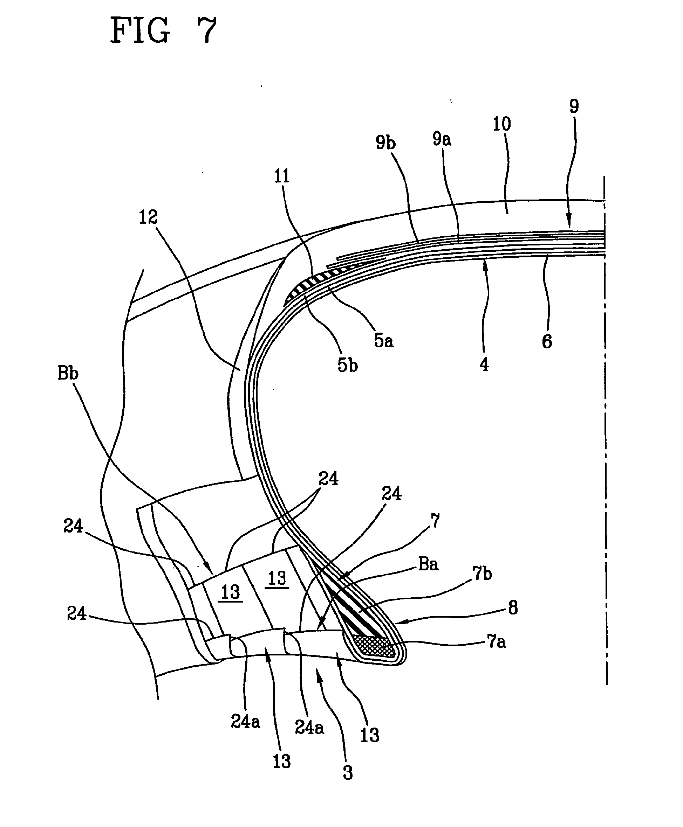

The laying unit 1 and forming drum 2 belong to an apparatus for manufacturing tyres 3 for vehicle wheels, which tyres 3 essentially comprise a carcass structure 4 having at least two radially superposed carcass plies 5a, 5b (Figs. 6 and 7). A layer of an airtight elastomer material or so-called liner 6 can be internally applied to the carcass plies 5a, 5b. Two annular anchoring structures 7, each comprising a so-called bead core 7a carrying an elastomeric filler 7b at a radially external position, are in engagement with respective end flaps of the carcass plies 5a, 5b. The annular anchoring structures 7 are integrated in the vicinity of regions usually identified as "beads" 8, at which normally engagement between tyre 3 and the respective mounting rim takes place. A belt structure 9 comprising one or more belt layers 9a, 9b is circumferentially applied around the carcass plies 5a, 5b and a tread band 10 circumferentially overlaps the belt structure 9. So-called "underbelt" inserts 11 can be associated with the belt structure 9 and they are each located between the carcass plies 5a, 5b and one of the axially opposite end edges of the belt structure 9. In addition or as an alternative to the under-belt inserts 11, annular inserts (not shown) of elastomeric material and/or comprising textile or metallic cords that are substantially parallel to the circumferential extension direction of the tyre (0-degree belt layer) or other reinforcing elements can be radially superposed at least on the axially opposite end edges of the belt layers 9a, 9b and/or interposed between the belt layers 9a, 9b themselves, at least at said end edges. Two sidewalls 12, each extending from the corresponding bead 9 to a corresponding side edge of the tread band 10, are applied to the carcass plies 5a, 5b, at laterally opposite positions.

Building of tyre 3 as above described is carried out through assembly of respective semi-finished products on the forming drum 2 by at least one assembling device.

Tyre 3 thus built is adapted to be submitted to a curing treatment and/or other working operations provided in the work cycle.

In the embodiment shown, at least part of the components designed to form the carcass structure 4 of tyre 3 are built and/or assembled on the forming drum 2. In greater detail, the forming drum 2 lends itself to first receive liner 6, if any, and subsequently the carcass plies 5a, 5b. Afterwards, devices not shown coaxially engage one of the annular anchoring structures 7 around each of the end flaps, locate an outer sleeve comprising the belt structure 9 and tread band 10 at a coaxially centred position around the cylindrical carcass sleeve and shape the carcass sleeve into a toroidal configuration through radial expansion of the carcass ply, so as to determine application thereof against a radially internal surface of the outer sleeve.

Each of the carcass plies 5a, 5b is made by the laying unit 1, which is provided for applying a plurality of strip-like elements 13 in a circumferentially mutually approached relationship on a laying surface 14 that is radially external to the forming drum 2, so as to form each ply layer having a continuous circumferential extension around the geometric axis "X-X" of said forming drum 2.

In this regard, it is important to emphasise that said laying surface 14 can be the radially external surface belonging to the forming drum 2 or, preferably, the radially external surface exhibited by components of tyre 2 already laid down on said forming drum 2, such as liner 6, for example. The radially external laying surface 14 of the forming drum 2 shown is substantially cylindrical and is suitable for manufacture of a cylindrical carcass sleeve.

The forming drum 2 is positioned and rotatably supported around its geometric axis "X-X". Devices, not shown, in the form of a chuck for example, moved by a motor, are used to set the forming drum 2 in rotation around said geometric axis "X-X".

The laying unit 1 is mounted close to the forming drum 2 and is adapted to apply the strip-like elements 13 onto said forming drum 2 during rotation of the latter. Preferably, the forming drum 2 is rotated step-wise: for instance, after each step the laying unit 1 applies one strip-like element 13.

The strip-like elements 13 are obtained by cutting operations sequentially carried out on at least one continuous elongated or ribbon-like element 15 coming from a drawing and/or calendering device, or from a feeding reel, and therefore they all have the same width, preferably included between about 20 mm and about 40 mm.

The continuous elongated element 15 and consequently the strip-like elements 13 obtained therefrom, each have a plurality of cords or similar thread elements of metal or textile material, extending parallel to each other along the longitudinal extension of the elongated element and the strip-like element itself, and at least partly coated with a layer of elastomeric material applied through a drawing and/or calendering operation.

The laying unit 1 comprises one laying head 16 including two supporting elements 17 that are movable along a guide structure 18 upon the action of transverse-movement devices, of the worm screw type for example (not shown as they can be made in any manner convenient for a person skilled in the art), between a first operating condition at which they are mutually approached and a second operation condition at which they are moved apart relative to an axial symmetry plane of the forming drum 2.

Associated with the laying unit 1 are radial-movement devices designed to cause translation of the supporting element 17 radially close to the radially external surface 14 of the forming drum 2. These radial-movement devices are not either shown or detailed as they can be made in any manner convenient for a person skilled in the art, and can operate on the guide structure 18 for example, in order to bring the strip-like element 13 onto the radially external surface 14 in contact relationship therewith.

Further associated with the laying unit 1 are rotation devices designed to rotate the laying head 16 around a radial axis "Y-Y" relative to the forming drum 2 and to lock said head 16 to the selected angular position around said axis "Y-Y". These rotation devices are neither shown nor described in detail, as they are made in any manner convenient for a person skilled in the art and can act on the guide structure 18 for example, in order to lay the strip-like element 13 in the selected angular position on the forming drum 2.

In the non-limiting example shown, each of the supporting elements 17 carries a presser element 19 movable along the strip-like element 13, in contrast relationship against the radially external surface 14 of the forming drum 2. In addition, preferably in engagement with each supporting element 17 is at least one auxiliary retaining element 20. In greater detail, each auxiliary retaining element 20 can consist for example of a small plate (or other similar mechanical element) projecting from the respective supporting element 17 so as to provide a support seat for the elongated element 15 and the cut strip-like element 13.

The laying unit 1 further comprises a cutting member 21 that is mounted on board the laying head 16 and is moved together with said head in the two radial-translation ways along axis "Y-Y" and rotation ways around the same axis "Y-Y".
Combined with the cutting member 21 is at least one grip member 22 that is movable between a first work position at which it is adapted to engage a final end of the ribbon-like element 15 in the vicinity of the cutting member 21, and a second work position at which it is moved away from the cutting member 21.

Following translation from the first to the second work positions, the grip member 22 drags along the ribbon-like element 15 so as to stretch it out beyond the cutting member 21 and preferably in a radially approached position relative to the forming drum 2, over a stretch of a length corresponding to that of the strip-like element 13 to be obtained following the subsequent operation of the cutting member 21 itself. In the accompanying figures, a pair of guide rollers 23 is shown which operate on the ribbon-like element 15 at a region immediately upstream of the cutting member 21.

The grip member 22 too is preferably mounted on board the laying head 16 and is moved together with said head in the two radial-translation movements along axis "Y-Y" and rotation movements around the same axis "Y-Y".

For instance, the guide structure 18, cutting member 21 and grip member 22 are all carried by a supporting frame, not shown, that is movable, relative to a base structure resting on the ground, along axis "Y-Y" and around the same axis "Y-Y" by means of the above mentioned radial-movement and rotation devices, respectively.

The supporting elements 17 are used for carrying the strip-like elements 13 at the instants intervening between cutting of the strip-like element upon the action of the cutting member 21 and application of same onto the forming drum 2.

In the embodiment shown, the cutting member 21 consists of shears comprising two blades movable in planes close to each other between a position of mutual moving apart and a position of mutual moving close. The grip member 22 consists of pliers.

Preferably in addition, the cutting member 21 can be rotated and locked to the desired angular position relative to the laying head 16 around an adjustment axis "Z-Z" parallel to axis "Y-Y" (Figs. 1, 3 and 5).

According to the present invention, before starting laying of the strip-like elements 13 of the first layer, i.e. the first carcass ply 5a, the laying head 16 is rotated around axis "Y-Y" radial to the forming drum 2 until placing it and locking it in the angular position corresponding to the desired inclination of each strip-like element 13 on drum 2. For example, this inclination is measured relative to a direction parallel to the rotation axis "X-X" of the forming drum 2 or relative to a symmetry plane "S" of said drum 2, which plane "S" is perpendicular to the aforesaid rotation axis "X-X".

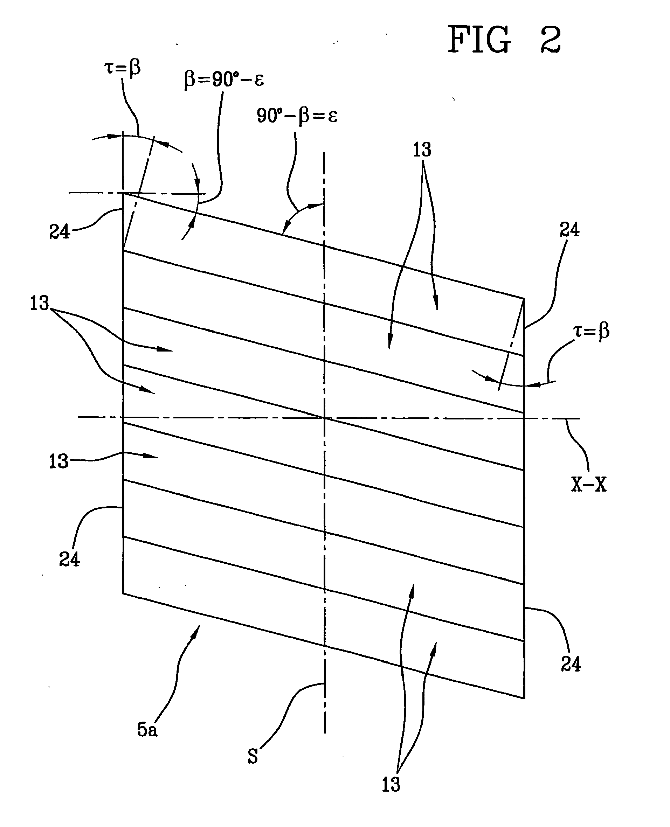

In the example shown (Fig. 2), being denoted at "ε" a first inclination angle of the strip-like element 13 relative to the axial symmetry plane "S", "β" (complementary to "ε"; "β" = 90° - "ε") is the inclination angle of the same strip-like element 13 relative to the direction parallel to the rotation axis "X-X".

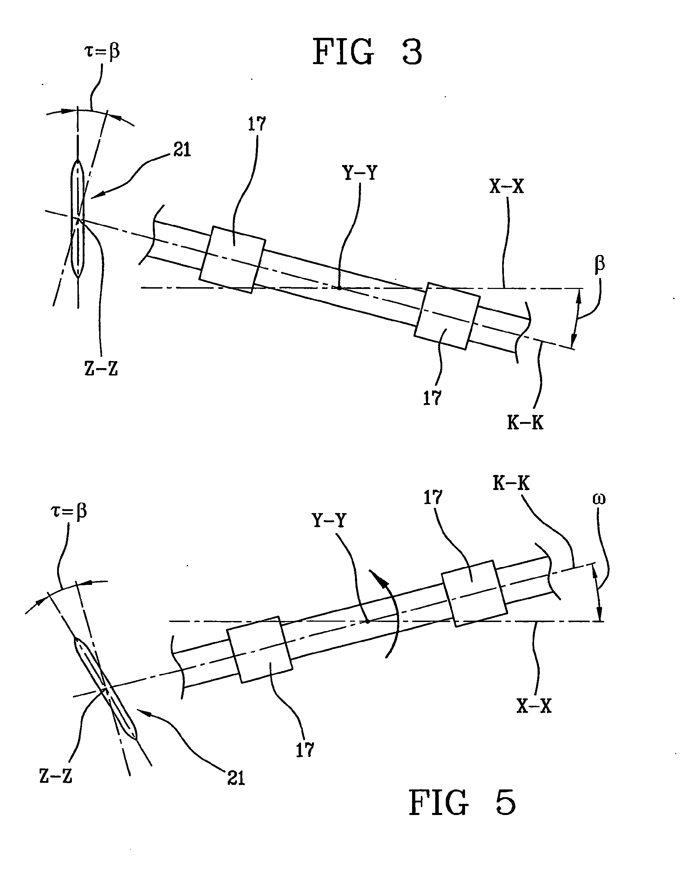

The inclination of the laying head 16 necessary for laying the strip-like elements 13 of the first carcass ply 5a according to the above mentioned inclination is therefore equal to "β" (Fig. 3). Said inclination of the laying head 16 is measured with reference to a translation axis "K-K" of the supporting elements 17 (coincident with a major extension axis of the guide structure 18), relative to a direction parallel to the rotation axis "X-X".

In addition, before starting laying of the strip-like elements 13 of the first ply 5a, the cutting member 21 is rotated relative to the laying head 16 around the adjustment axis "Z-Z" until bringing it and locking it to an angular position corresponding to the inclination of the opposite edges 24 of each strip-like element 13. Since the cutting member 21 is locked in said angular position, the two opposite edges 24 of each strip-like element 13 are cut according to the same cutting angle "τ", measured between the edge 24 itself and a direction perpendicular to the longitudinal extension of the strip-like element 13 (Fig. 2). This cutting angle "τ" is also the angle delimited between the blade of the cutting member 21 and a direction perpendicular to the translation axis "K-K" of the supporting elements 17 (Fig. 3).

In the example shown (Fig. 2), the cutting member 21 is rotated through the cutting angle "τ" equal to the inclination angle "β" of the strip-like elements 13 of the first ply 5a (i.e. complementary to the first inclination angle "ε") and opposite to said inclination angle "β". As a result, the edges 24 of all the strip-like elements 13 of the first ply 5a are parallel to the axial symmetry plane "S" of the forming drum 2 and therefore also the axially opposite edges "Ba" of the first carcass ply 5a are circumferences lying in a plane parallel to said axial symmetry plane "S".

The continuous ribbon-like element 15 is fed by means of rollers 23, onto the auxiliary retaining elements 20 and towards the grip member 22 that catches it and drags it along away from the cutting member 21 in a direction coincident with the translation axis "K-K". The cutting member 21 cuts the continuous ribbon-like element 15 to the size of a strip-like element 13 and the latter is moved close to the forming drum 2 and applied thereto. To this aim, the supporting elements 17 and auxiliary retaining elements 20 are radially moved close to drum 2 and subsequently moved away from each other while the presser elements 19 progressively press the strip-like element 13 against the forming drum 2 starting from a central portion of said strip-like element 13 towards the opposite ends of same. This operation is repeated at each rotation step of drum 2, for each strip-like element of the first carcass ply 5a.

When laying of all the strip-like elements 13 of the first carcass ply 5a has been completed and before starting laying of the strip-like elements 13 of the second carcass ply 5b, the laying head 16 is rotated again around axis "Y-Y" radial to the forming drum 2 until disposing said head in the angular position corresponding to the desired inclination of each strip-like element 13 of the second ply 5a on drum 2.

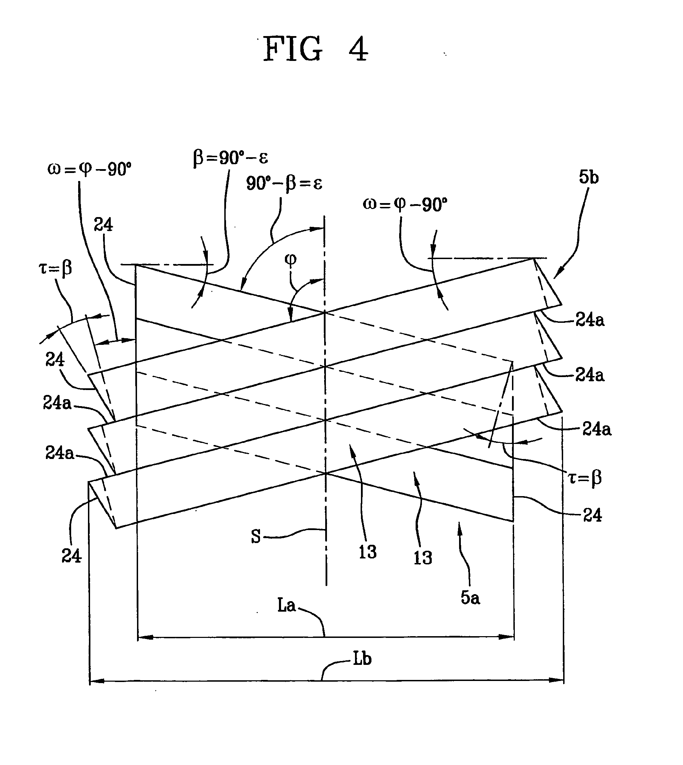

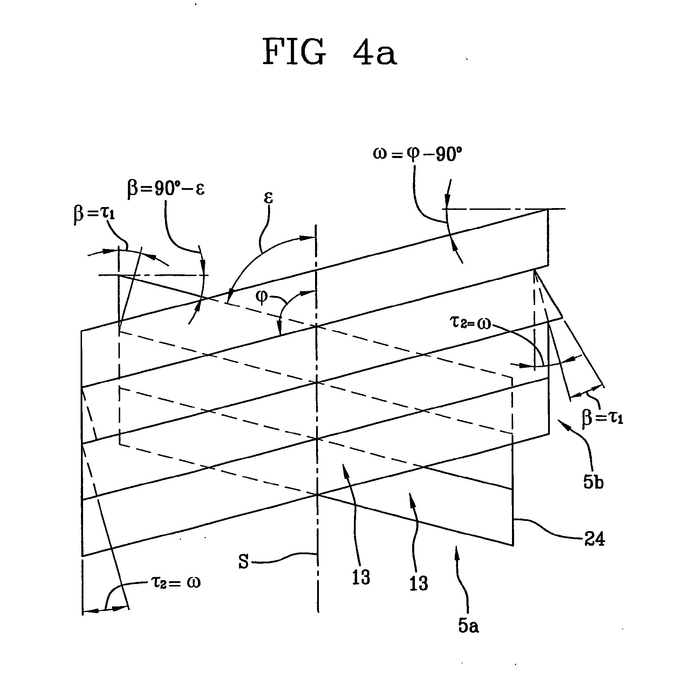

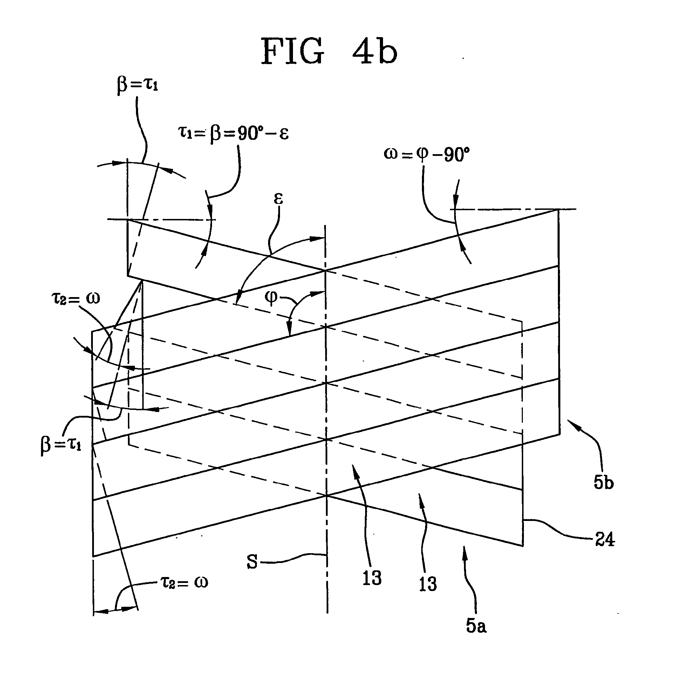

In the example shown (Fig. 4), being denoted at "ϕ" a second inclination angle of the strip-like elements 13 relative to the axial symmetry plane "S", "ω" (complementary to "ϕ"; "ω" = "ϕ"-90°) is the inclination angle of the same strip-like element 13 relative to the direction parallel to the rotation axis "X-X".

The inclination of the laying head 16 necessary for laying the strip-like elements 13 of the second carcass ply 5b with the aforesaid inclination is therefore equal to "ω" (Fig. 5).

In the example shown (Fig. 4), the strip-like elements 13 of the first carcass ply 5a are inclined on the opposite side relative to the strip-like elements 13 of the second ply 5b with respect to an angular reference position perpendicular to the axial symmetry plane "S" of the forming drum 2.

For laying the strip-like elements 13 of the second ply 5b, according to the steps already described for the first ply 5a, the cutting member 21 is not shifted (relative to the laying head 16) from the position used for laying of the strip-like elements 13 of the first ply 5a.

As a result, the cutting angle "τ" remains unchanged but, since the laying head 16 has been rotated with the cutting member 22 on board, each edge 24 of each strip-like element 13 of the second carcass ply 5b delimits, together with the axial symmetry plane "S" of the forming drum 2, an angle equal to the sum of "ω" and "β" (Fig. 4). The axially opposite edges "Bb" of the second carcass ply 5b, formed by the circumferential succession of the edges 24 of each strip-like element 13, therefore appear to be indented. In particular, each of said axially opposite edges "Bb" of the second carcass ply 5b is saw-toothed and is formed by the end edges 24 of the strip-like elements 13 and the stretches 24a of the longitudinal edges of the same strip-like elements 13 (Figs. 4 and 6).

In accordance with an alternative embodiment shown in the built tyre shown in Fig. 7, the axially opposite edges of the first carcass ply 5a are indented and the edges of the second carcass ply 5b are parallel to the axial symmetry plane "S". In this embodiment, the cutting angle "τ" is equal to the inclination angle "ω" of the strip-like elements 13 of the second ply 5b (i.e. complementary to the second inclination angle "ϕ") and opposite to said inclination angle "ω".

In accordance with further embodiments not shown, both the axially opposite edges "Ba" of the first carcass ply 5a and those "Bb" of the second carcass ply 5b are indented.

In accordance with an alternative and preferred embodiment of the process (Fig. 4a), after laying all the strip-like elements 13 of the first carcass ply 5a (as in Fig. 2) and after bringing the laying head 16, through rotation, to the angular position corresponding to the desired inclination of each strip-like element 13 of the second carcass ply 5b on drum 2, the cutting member 21 is rotated relative to the laying head 16 around the adjustment axis "Z-Z" until bringing it and locking it to an angular position corresponding to the desired inclination of opposite edges 24 of each strip-like element 13 of the second carcass ply 5b. The strip-like element 13 of the second carcass ply 5b that is laid first, without being rejected, has an end edge 24 cut according to a first cutting angle "τ1" and the opposite edge cut according to a second cutting angle "τ2" different from the first one. The following strip-like elements 13 of the second carcass ply 5b preferably have both the opposite edges 24 cut according to the second cutting angle "τ2". In the embodiment shown in Fig. 4a, the first cutting angle "τ1" is equal to the inclination angle "β" of the strip-like elements 13 of the first carcass ply 5a (i.e. complementary to the first inclination angle "ε") and the second cutting angle "τ2" is equal to the inclination angle "ω" of the strip-like elements of the second ply 5b (i.e. complementary to the second inclination angle "ϕ"). As a result, all edges 24 of the strip-like elements 13 of the first ply 5a and all edges 24 of the strip-like elements 13 of the second ply 5b except one (belonging to the strip-like element laid first), are parallel to the axial symmetry plane "S" of the forming drum. One of the axially opposite edges "Ba", "Bb" of the second ply 5b therefore has an indented portion in the region corresponding to the strip-like element laid down first.

In accordance with a further preferred embodiment of the process (Fig. 4b), before laying the last strip-like element 13 of the first carcass ply 5a, the cutting member 21 is rotated relative to the laying head 16 around the adjustment axis "Z-Z" until bringing it and locking it to an angular position corresponding to the desired inclination of opposite edges 24 of each strip-like element 13 of the second carcass ply 5b. The strip-like element 13 of the first carcass ply 5a that is laid last, without being rejected, has an end edge 24 cut according to a first cutting angle "τ1" and the opposite edge cut according to a second cutting angle "τ2" different from the first one. In the embodiment shown, all edges 24 of the strip-like elements 13 of the first ply 5a except one (belonging to the strip-like element 13 laid last), and all edges 24 of the strip-like elements 13 of the second ply 5b are parallel to the axial symmetry plane "S" of the forming drum. One of the axially opposite edges "Ba", "Bb" of the first ply 5a therefore has an indented portion in the region corresponding to the strip-like element 13 laid last.

Preferably, turning to Figs. 2 and 4, taking the axial symmetry plane "S" as the reference and the anticlockwise direction as the positive rotation direction, the first inclination angle "ε" is preferably included between about 70° and about 90°, more preferably between about 75° and about 87°. The second inclination angle "ϕ" is preferably included between about 90° and about 110°, more preferably between about 93° and about 105°.

According to the embodiment shown in the accompanying drawings, the axial extension "La" of the first carcass ply 5a, measured along a direction parallel to the rotation axis "X-X" of the forming drum 2 is smaller than the axial extension "Lb" of the second carcass ply 5b. In a variant, the axial extension "La" of the first carcass ply 5a is greater than the axial extension "Lb" of the second carcass ply 5b.

Preferably, the difference between the axial extension "La" of the first carcass ply 5a and the axial extension "Lb" of the second carcass ply 5b is included between about 1% and about 8% of the axial extension of the axially more extended carcass ply.

In the example shown, the axial extension of the first carcass ply 5a is about 480 mm and that of the second carcass ply 5b is about 500 mm.

The amounts of these axial extensions "La", "Lb" determine the positions of the end flaps of the carcass plies 5a, 5b in the built tyre 3.

Preferably, the two annular anchoring structures 7 are engaged with the respective end flaps of the carcass plies 5a, 5b by turning up said end flaps around said annular anchoring structures 7. Depending on the ply length, each of the axially opposite edges of said ply appears to be located, in the cured and molded tyre 3, at the annular anchoring structure 7, in side by side relationship with the bead core 7a and/or filler 7b, or in a region radially external to said annular anchoring structure 7, at the radially innermost portion of the sidewall 12 (Figs. 6 and 7).

In the embodiment of tyre 3 shown in Fig. 6, obtained from the carcass plies 5a, 5b shown in Fig. 4 (the second carcass ply 5b is axially more extended than the first one 5a and the axially opposite edges thereof are indented), the indented edges are in the region radially external to the annular anchoring structure 7 that is a region of maximum bending of tyre 3 during rolling on the road.

Preferably, in the embodiments of tyre 3 in which the indented edges are in the region of maximum bending, these indented edges are such shaped as to eliminate possible triggering of breakings due to fatigue phenomena, making the corners rounded for example and/or cutting each edge 24 of each strip-like element 13 according to an arched outline.

In the embodiment of tyre 3 shown in Fig. 7, the axially opposite edges of the second carcass ply 5b are indented and these indented edges are disposed in axial side by side relationship with the annular anchoring structure 7, whereas the edges of the first carcass ply 5a terminate in the region radially external to said annular anchoring structure 7.

## Claims

1. A process for building tyres for vehicle wheels, comprising:
- forming a plurality of strip-like elements (13) in such a manner that the opposite end edges (24) of each strip-like element (13) are cut according to at least one cutting angle (τ, τ₁, τ₂);
- forming at least one first carcass ply (5a) and one second carcass ply (5b) which radially overlap each other on a laying surface (14) radially external to a forming drum (2), and belong to a carcass structure (4) of a tyre being processed, each carcass ply (5a, 5b) comprising a succession of strip-like elements (13) disposed circumferentially in a mutually approached relationship, said opposite end edges (24) of each strip-like element (13) forming, in succession with each other, axially opposite respective edges (Ba, Bb) of said first carcass ply (5a) and second carcass ply (5b);
- wherein at least one of the axially opposite edges (Ba, Bb) of at least one of said first carcass ply (5a) and second carcass ply (5b) is at least partly indented.

2. A process as claimed in claim 1, wherein said strip-like elements (13) of said first carcass ply (5a) are laid according to a predetermined inclination angle (ε) relative to an axial symmetry plane of said forming drum (2), and said strip-like elements (13) of said second carcass ply (5b) are laid according to a predetermined second inclination angle (ϕ) different from the first one, relative to an axial symmetry plane (S) of said forming drum (2).

3. A process as claimed in claim 1, wherein formation of said plurality of strip-like elements (13) comprises:
- setting an angular position of a cutting member (21), mounted on board a laying head (16), relative to said laying head (16) according to said at least one cutting angle (τ, τ₁, τ₂):
- feeding the laying head (16) with a continuous elongated or ribbon-like element (15);
- cutting the continuous elongated element (15) by means of the cutting member (21).

4. A process as claimed in claim 3, wherein the step of forming said first carcass ply (5a) comprises:
- setting a first angular position of a laying head (16) around an axis (Y-Y) radial to the forming drum (2);
- laying said strip-like elements (13) on the laying surface (14) so as to form said first carcass ply, wherein the step of forming said second carcass ply (5b) comprises:
- rotating the laying head (16) around the axis (Y-Y) radial to the forming drum (2) for setting a second angular position different from the first one;
- laying said strip-like elements (13) at a position radially external to the first carcass ply (5a) so as to form said second carcass ply (5b).

5. A process as claimed in claim 3, comprising:
- maintaining the angular position of the cutting member (21) constant with respect to the laying head (16) and cutting all the strip-like elements (13) of the first carcass ply (5a) and the second carcass ply (5b) according to a predetermined common cutting angle (τ).

6. A process as claimed in claim 4, comprising:
- rotating the cutting member (21) relative to said laying head (16) after bringing the laying head (16) to the second angular position.

7. A process as claimed in claim 4, comprising:
- rotating the cutting member (21) relative to said laying head (16) before bringing the laying head (16) to the second angular position.

8. A process as claimed in claim 4, wherein the laying operation comprises:
- supporting each strip-like element (13) by means of two supporting elements (17) belonging to the laying head (16);
- moving the supporting elements (17) and said strip-like element (13) along a radial trajectory towards the forming drum (2) to make said strip-like element (13) approach the laying surface (14).

9. A process as claimed in claim 8, wherein the laying operation comprises:
- moving the two supporting elements (17) away from each other along a substantially axial direction making them slide relative to each strip-like element (13), so as to progressively apply said strip-like element (13) against the laying surface (14), pulling it in said opposite directions.

10. A process as claimed in claim 1, wherein the strip-like elements (13) of the first carcass ply (5a) are inclined on the opposite side relative to the strip-like elements (13) of the second carcass ply (5b) with respect to an angular reference position perpendicular to an axial symmetry plane (S) of the forming drum (2).

11. A process as claimed in claim 2, wherein the cutting angle (τ) is complementary to the first inclination angle (ε), and wherein the axially opposite edges (24) of each strip-like element (13) of the first carcass ply (5a) are parallel to the axial symmetry plane (S) of the forming drum (2).

12. A process as claimed in claim 2, wherein the cutting angle (τ) is complementary to the second inclination angle (ϕ), and wherein the axially opposite edges (24) of each strip-like element (13) of the second carcass ply (5b) are parallel to the axial symmetry plane (S) of the forming drum (2).

13. A process as claimed in claim 1, wherein the axial extension of the first carcass ply (5a) is greater than the axial extension of the second carcass ply (5b).

14. A process as claimed in claim 1, wherein the axial extension of the first carcass ply (5a) is smaller than the axial extension of the second carcass ply (5b).

15. A process as claimed in claim 13 or 14, wherein the difference between the axial extension of the first carcass ply (5a) and the axial extension of the second carcass ply (5b) is included between 1% and 8% of the axial extension of the axially more extended carcass ply (5a; 5b).

16. A process as claimed in claim 2, wherein the first inclination angle (ε) is included between 70° and 90°.

17. A process as claimed in claim 2, wherein the second inclination angle (ϕ) is included between 90° and 110°.

18. A process as claimed in claim 1, further comprising:
- coaxially engaging an annular anchoring structure (7) around each of two end flaps of said first carcass ply (5a) and second carcass ply (5b);
- turning up each of the end flaps around the respective annular anchoring structure (7), forming said carcass structure (4).

19. A process as claimed in claim 18, comprising:
- positioning the at least partly indented edge (Ba, Bb) at a region (3) radially external to said annular anchoring structure (7).

20. A process as claimed in claim 18, comprising:
- axially moving the at least partly indented edge (Ba, Bb) to a position in side by side relationship with said annular anchoring structure (7).

21. A process as claimed in claim 1, comprising:
- cutting the opposite end edges (24) of each strip-like element (13) of the first carcass ply (5a) following an arched outline.

22. A process as claimed in claim 1, comprising:
- cutting the opposite end edges (24) of each strip-like element (13) of the second carcass ply (5b) following an arched outline.

23. A process as claimed in claim 1, comprising:
- removing or rounding off the sharp corners present at the opposite end edges (24) of each strip-like element (13) of the first carcass ply (5a).

24. A process as claimed in claim 1, comprising:
- removing or rounding off the sharp corners present at the opposite end edges (24) of each strip-like element (13) of the second carcass ply (5b).

## Patentansprüche

1. Verfahren zum Bauen von Fahrzeugrädern, umfassend:
- derartiges Ausbilden von mehreren streifenartigen Elementen (13), dass die gegenüberliegenden Endkanten (24) jedes streifenartigen Elements (13) gemäß zumindest einem Schnittwinkel (τ; τ₁, τ₂) geschnitten sind;
- Ausbilden von zumindest einer ersten Karkasslage (5a) und einer zweiten Karkasslage (5b), die einander radial auf einer Legefläche (14) radial extern einer Formtrommel (2) überdecken und zu einer Karkassstruktur (4) eines Reifens gehören, welcher verarbeitet wird, wobei jede Karkasslage (5a, 5b) eine Abfolge von streifenartigen Elementen (13) umfasst, die umfänglich in einer sich gegenseitig annähernden Beziehung angeordnet werden, wobei die gegenüberliegenden Endkanten (24) jedes streifenartigen Elements (13) in Abfolge miteinander jeweilige axial gegenüberliegende Kanten (Ba, Bb) der ersten Karkasslage (5a) und zweiten Karkasslage (5b) ausbilden;
- wobei zumindest eine der axial gegenüberliegenden Kanten (Ba, Bb) von zumindest einer der ersten Karkasslage (5a) und zweiten Karkasslage (5b) zumindest teilweise eingekerbt ist.

2. Verfahren nach Anspruch 1, wobei die streifenartigen Elemente (13) der ersten Karkasslage (5a) gemäß einem vorgegebenen Neigungswinkel (ε) bezüglich einer axialen Symmetrieebene der Formtrommel (2) gelegt werden und die streifenartigen Elemente (13) der zweiten Karkasslage (5b) gemäß einem vorgegebenen zweiten Neigungswinkel (ϕ) bezüglich einer axialen Symmetrieebene (S) der Formtrommel (2) gelegt werden.

3. Verfahren nach Anspruch 1, wobei die Ausbildung der streifenartigen Elemente (13) Folgendes umfasst:
- Einstellen einer Winkelposition eines Schneidglieds (21), das in einen Legekopf (16) eingebaut ist, bezüglich des Legekopfs (16) gemäß dem zumindest einen Schnittwinkel (τ; τ₁, τ₂);
- Beschicken des Legekopfs (16) mit einem fortlaufenden gestreckten oder bandartigen Element (15);
- Schneiden des fortlaufenden gestreckten Elements (15) mithilfe des Schneidglieds (21).

4. Verfahren nach Anspruch 3, wobei der Schritt des Ausbildens der ersten Karkasslage (5a) Folgendes umfasst:
- Einstellen einer ersten Winkelposition eines Legekopfs (16) um eine Achse (Y-Y) radial zur Formtrommel (2);
- Legen der streifenartigen Elemente (13) auf die Legefläche (14) zum Ausbilden der ersten Karkasslage (5a),
wobei der Schritt des Ausbildens der zweiten Karkasslage (5b) Folgendes umfasst:
- Drehen des Legekopfs (16) um die Achse (Y-Y) radial zur Formtrommel (2) zum Einstellen einer zweiten Winkelposition, die von der ersten abweicht;
- Legen der streifenartigen Elemente (13) an einer zur ersten Karkasslage (5a) radial externen Position zum Ausbilden der zweiten Karkasslage (5b).

5. Verfahren nach Anspruch 3, umfassend:
- Konstanthalten der Winkelposition des Schneidglieds (21) bezüglich des Legekopfs (16) und Schneiden aller der streifenartigen Elemente (13) der ersten Karkasslage (5a) und der zweiten Karkasslage (5b) gemäß einem vorgegebenen gemeinsamen Winkel (τ).

6. Verfahren nach Anspruch 4, umfassend:
- Drehen des Schneidglieds (21) bezüglich des Legekopfs (16) nach dem Verbringen des Legekopfs (16) in die zweite Winkelposition.

7. Verfahren nach Anspruch 4, umfassend:
- Drehen des Schneidglieds (21) bezüglich des Legekopfs (16) vor dem Verbringen des Legekopfs (16) in die zweite Winkelposition.

8. Verfahren nach Anspruch 4, wobei der Legevorgang Folgendes umfasst:
- Stützen des streifenartigen Elements (13) mithilfe von zwei Stützelementen (17), die zum Legekopf (16) gehören;
- Bewegen der Stützelemente (17) und des streifenartigen Elements (13) entlang einer radialen Laufbahn zur Formtrommel (2) hin, um sich das streifenartige Element (13) der Legefläche (14) annähern zu lassen.

9. Verfahren nach Anspruch 8, wobei der Legevorgang Folgendes umfasst:
- Bewegen der zwei Stützelemente (17) weg entlang einer im Wesentlichen axialen Richtung weg voneinander, wodurch sie bezüglich jedes streifenartigen Elements (13) zum Gleiten gebracht werden, um das streifenartige Element (13) fortschreitend auf die Legefläche (14) aufzubringen, wobei es in die Gegenrichtungen gezogen wird.

10. Verfahren nach Anspruch 1, wobei die streifenartigen Elemente (13) der ersten Karkasslage (5a) auf der gegenüberliegenden Seite bezüglich der streifenartigen Elemente (13) der zweiten Karkasslage (5b) bezüglich einer Winkelbezugsposition senkrecht zu einer Symmetrieebene (S) der Formtrommel (2) geneigt werden.

11. Verfahren nach Anspruch 2, wobei der Schnittwinkel (τ) zum ersten Neigungswinkel (ε) komplementär ist, und wobei die axial gegenüberliegenden Kanten (24) jedes streifenartigen Elements (13) der ersten Karkasslage (5a) parallel zur axialen Symmetrieebene (S) der Formtrommel (2) sind.

12. Verfahren nach Anspruch 2, wobei der Schnittwinkel (τ) zum zweiten Neigungswinkel (ϕ) komplementär ist, und wobei die axial gegenüberliegenden Kanten (24) jedes streifenartigen Elements (13) der zweiten Karkasslage (5b) parallel zur axialen Symmetrieebene (S) der Formtrommel (2) sind.

13. Verfahren nach Anspruch 1, wobei die axiale Ausdehnung der ersten Karkasslage (5a) größer als die axiale Ausdehnung der zweiten Karkasslage (5b) ist.

14. Verfahren nach Anspruch 1, wobei die axiale Ausdehnung der ersten Karkasslage (5a) kleiner als die axiale Ausdehnung der zweiten Karkasslage (5b) ist.

15. Verfahren nach einem der Ansprüche 13 oder 14, wobei die Differenz zwischen der axialen Ausdehnung der ersten Karkasslage (5a) und der axialen Ausdehnung der zweiten Karkasslage (5b) zwischen 1% und 8% der axialen Ausdehnung der axial ausgedehnteren Karkasslage (5a; 5b) beinhaltet ist.

16. Verfahren nach Anspruch 2, wobei der erste Neigungswinkel (ε) zwischen 70° und 90° beinhaltet ist.

17. Verfahren nach Anspruch 2, wobei der zweite Neigungswinkel (ϕ) zwischen 90° und 110° beinhaltet ist.

18. Verfahren nach Anspruch 1, ferner umfassend:
- koaxiales in Eingriff bringen einer ringförmigen Verankerungsstruktur (7) um jedes von zwei Endwulstbändern der ersten Karkasslage (5a) und zweiten Karkasslage (5b);
- Umschlagen von jedem der Endwulstbänder nach oben um die jeweilige ringförmige Verankerungsstruktur (7), wodurch die Karkassstruktur (4) ausgebildet wird.

19. Verfahren nach Anspruch 18, umfassend:
- Anordnen der zumindest teilweise eingekerbten Kante (Ba, Bb) in einem Bereich, der radial extern zur ringförmigen Verankerungsstruktur (7) liegt.

20. Verfahren nach Anspruch 18, umfassend:
- axiales Bewegen der zumindest teilweise gekerbten Kante (Ba, Bb) in eine Position in nebeneinanderliegender Beziehung zur ringförmigen Verankerungsstruktur (7)

21. Verfahren nach Anspruch 1, umfassend:
- Schneiden der gegenüberliegenden Endkanten (24) jedes streifenartigen Elements (13) der ersten Karkasslage (5a) einer bogenförmigen Kontur folgend.

22. Verfahren nach Anspruch 1, umfassend:
- Schneiden der gegenüberliegenden Endkanten (24) jedes streifenartigen Elements (13) der zweiten Karkasslage (5b) einer bogenförmigen Kontur folgend.

23. Verfahren nach Anspruch 1, umfassend:
- Entfernen oder Abrunden der scharfen Ecken, die an den gegenüberliegenden Endkanten (24) jedes streifenartigen Elements (13) der ersten Karkasslage (5a) vorhanden sind.

24. Verfahren nach Anspruch 1, umfassend:
- Entfernen oder Abrunden der scharfen Ecken, die an den gegenüberliegenden Endkanten (24) jedes streifenartigen Elements (13) der zweiten Karkasslage (5b) vorhanden sind.

## Revendications

1. Processus destiné à construire des pneus pour des roues de véhicule, comprenant le fait :
de former une pluralité d'éléments en forme de bande (13) de manière à ce que les bords d'extrémité opposés (24) de chaque élément en forme de bande (13) soient coupés selon au moins un angle de coupe (τ ; τ₁, τ₂) ;
de former au moins une première nappe de carcasse (5a) et une deuxième nappe de carcasse (5b) qui se chevauchent radialement sur une surface de pose (14) radialement externe à un tambour de formage (2), et qui appartiennent à une structure de carcasse (4) d'un pneu qui est en cours de traitement, chaque nappe de carcasse (5a, 5b) comprenant une succession d'éléments en forme de bande (13) disposés de manière circonférentielle dans une relation d'approche mutuelle, lesdits bords d'extrémité opposés (24) de chaque élément en forme de bande (13) formant, en succession l'un avec l'autre, des bords axialement opposés respectifs (Ba, Bb) de ladite première nappe de carcasse (5a) et de ladite deuxième nappe de carcasse (5b) ;
dans lequel au moins l'un des bords axialement opposés (Ba, Bb) d'au moins l'une de ladite première nappe de carcasse (5a) et de ladite deuxième nappe de carcasse (5b) est au moins partiellement dentelé.

2. Processus tel que revendiqué dans la revendication 1, dans lequel lesdits éléments en forme de bande (13) de ladite première nappe de carcasse (5a) sont posés selon un angle d'inclinaison prédéterminé (ε) par rapport à un plan de symétrie axial dudit tambour de formage (2), et lesdits éléments en forme de bande (13) de ladite deuxième nappe de carcasse (5b) sont posés selon un deuxième angle d'inclinaison prédéterminé (ϕ) différent du premier angle d'inclinaison, par rapport à un plan de symétrie axial (S) dudit tambour de formage (2).

3. Processus tel que revendiqué dans la revendication 1, dans lequel la formation de ladite pluralité d'éléments en forme de bande (13) comprend le fait :
de régler une position angulaire d'un élément de coupe (21), monté à bord d'une tête de pose (16), par rapport à ladite tête de pose (16) selon ledit au moins un angle de coupe (τ, τ₁, τ₂):
d'alimenter la tête de pose (16) avec un élément (15) allongé continu ou en forme de ruban ;
de couper l'élément allongé continu (15) au moyen de l'élément de coupe (21).

4. Processus tel que revendiqué dans la revendication 3, dans lequel l'étape qui consiste à former ladite première nappe de carcasse (5a) comprend le fait :
de régler une première position angulaire d'une tête de pose (16) autour d'un axe (Y-Y) radial par rapport au tambour de formage (2) ;
de poser lesdits éléments en forme de bande (13) sur la surface de pose (14) de manière à former ladite première nappe de carcasse,
dans lequel l'étape qui consiste à former ladite deuxième nappe de carcasse (5b) comprend le fait :
de faire tourner la tête de pose (16) autour de l'axe (Y-Y) radial par rapport au tambour de formage (2) pour régler une deuxième position angulaire différente de la première position angulaire ;
de poser lesdits éléments en forme de bande (13) à une position radialement externe à la première nappe de carcasse (5a) de manière à former ladite deuxième nappe de carcasse (5b).

5. Processus tel que revendiqué dans la revendication 3, comprenant le fait :
de maintenir la position angulaire de l'élément de coupe (21) constante par rapport à la tête de pose (16) et de couper tous les éléments en forme de bande (13) de la première nappe de carcasse (5a) et de la deuxième nappe de carcasse (5b) selon un angle de coupe commun prédéterminé (τ).

6. Processus tel que revendiqué dans la revendication 4, comprenant le fait :
de faire tourner l'élément de coupe (21) par rapport à ladite tête de pose (16) après avoir amené la tête de pose (16) vers la deuxième position angulaire.

7. Processus tel que revendiqué dans la revendication 4, comprenant le fait :
de faire tourner l'élément de coupe (21) par rapport à ladite tête de pose (16) avant d'amener la tête de pose (16) vers la deuxième position angulaire.

8. Processus tel que revendiqué dans la revendication 4, dans lequel l'opération de pose comprend le fait :
de supporter chaque élément en forme de bande (13) au moyen de deux éléments de support (17) appartenant à la tête de pose (16) ;
de déplacer les éléments de support (17) et ledit élément en forme de bande (13) le long d'une trajectoire radiale vers le tambour de formage (2) pour rapprocher ledit élément en forme de bande (13) de la surface de pose (14).

9. Processus tel que revendiqué dans la revendication 8, dans lequel l'opération de pose comprend le fait :
d'écarter les deux éléments de support (17) l'un de l'autre le long d'une direction essentiellement axiale en les faisant glisser par rapport à chaque élément en forme de bande (13), de manière à appliquer progressivement ledit élément en forme de bande (13) contre la surface de pose (14), en le tirant dans lesdites directions opposées.

10. Processus tel que revendiqué dans la revendication 1, dans lequel les éléments en forme de bande (13) de la première nappe de carcasse (5a) sont inclinés sur le côté opposé par rapport aux éléments en forme de bande (13) de la deuxième nappe de carcasse (5b) par rapport à une position de référence angulaire perpendiculaire à un plan de symétrie axial (S) du tambour de formage (2).

11. Processus tel que revendiqué dans la revendication 2, dans lequel l'angle de coupe (τ) est complémentaire au premier angle d'inclinaison (ε), et dans lequel les bords axialement opposés (24) de chaque élément en forme de bande (13) de la première nappe de carcasse (5a) sont parallèles au plan de symétrie axial (S) du tambour de formage (2).

12. Processus tel que revendiqué dans la revendication 2, dans lequel l'angle de coupe (τ) est complémentaire au deuxième angle d'inclinaison (ϕ), et dans lequel les bords axialement opposés (24) de chaque élément en forme de bande (13) de la deuxième nappe de carcasse (5b) sont parallèles au plan de symétrie axial (S) du tambour de formage (2).

13. Processus tel que revendiqué dans la revendication 1, dans lequel l'étendue axiale de la première nappe de carcasse (5a) est plus grande que l'étendue axiale de la deuxième nappe de carcasse (5b).

14. Processus tel que revendiqué dans la revendication 1, dans lequel l'étendue axiale de la première nappe de carcasse (5a) est plus petite que l'étendue axiale de la deuxième nappe de carcasse (5b).

15. Processus tel que revendiqué dans la revendication 13 ou 14, dans lequel la différence entre l'étendue axiale de la première nappe de carcasse (5a) et l'étendue axiale de la deuxième nappe de carcasse (5b) est comprise entre 1% et 8% de l'étendue axiale de la nappe de carcasse axialement la plus étendue (5a ; 5b).

16. Processus tel que revendiqué dans la revendication 2, dans lequel le premier angle d'inclinaison (ε) est compris entre 70° et 90°.

17. Processus tel que revendiqué dans la revendication 2, dans lequel le deuxième angle d'inclinaison (ϕ) est compris entre 90° et 110°.

18. Processus tel que revendiqué dans la revendication 1, comprenant en outre le fait :
d'engager de manière coaxiale une structure d'ancrage annulaire (7) autour de chacun des deux rabats d'extrémité de ladite première nappe de carcasse (5a) et de ladite deuxième nappe de carcasse (5b) ;
de faire tourner vers le haut chacun des rabats d'extrémité autour de la structure d'ancrage annulaire respective (7), formant ladite structure de carcasse (4).

19. Processus tel que revendiqué dans la revendication 18, comprenant le fait :
de positionner le bord au moins partiellement en retrait (Ba, Bb) au niveau d'une zone (3) radialement externe à ladite structure d'ancrage annulaire (7).

20. Processus tel que revendiqué dans la revendication 18, comprenant le fait :
de déplacer de manière axiale le bord au moins partiellement en retrait (Ba, Bb) vers une position dans une relation côte à côte avec ladite structure d'ancrage annulaire (7).

21. Processus tel que revendiqué dans la revendication 1, comprenant le fait :
de couper les bords d'extrémité opposés (24) de chaque élément en forme de bande (13) de la première nappe de carcasse (5a) suivant un profil en arc.

22. Processus tel que revendiqué dans la revendication 1, comprenant le fait :
de couper les bords d'extrémité opposés (24) de chaque élément en forme de bande (13) de la deuxième nappe de carcasse (5b) suivant un profil en arc.

23. Processus tel que revendiqué dans la revendication 1, comprenant le fait :
de retirer ou d'arrondir les coins pointus présents au niveau des bords d'extrémité opposés (24) de chaque élément en forme de bande (13) de la première nappe de carcasse (5a).

24. Processus tel que revendiqué dans la revendication 1, comprenant le fait :
de retirer ou d'arrondir les coins pointus présents au niveau des bords d'extrémité opposés (24) de chaque élément en forme de bande (13) de la deuxième nappe de carcasse (5b).
